# EUROPÄISCHE PATENTSCHRIFT

(11) **EP 1 380 204 B1**
(45) Veröffentlichungstag und Bekanntmachung des Hinweises auf die Patenterteilung: **30.11.2005**
(21) Anmeldenummer: 03014786.2
(22) Anmeldetag: 28.06.2003
(51) Int. Cl.: A01D 43/08, A01F 29/12

(54) **Verfahren und Vorrichtung zur automatischen Positionsveränderung des Nachbeschleunigungsorgans in einer landwirtschaftlichen Erntemaschine**
Method and device for an automatic position change of the post-accelerator device in a agricultural harvester
Méthode et dispositif pour le changement automatique de position de l'élément de post-accélération dans une moissonneuse agricole

(30) Priorität: 10.07.2002 DE 10231316
(43) Veröffentlichungstag der Anmeldung: 14.01.2004
(73) Patentinhaber: CLAAS Selbstfahrende Erntemaschinen GmbH, 33428 Harsewinkel (DE)
(72) Erfinder: Diekhans, Norbert, Dr. Ing., 33335 Gütersloh (DE)

(56) Entgegenhaltungen:
- DE-A- 19 732 722
- DE-C- 932 526

## Beschreibung

Die Erfindung betrifft ein Verfahren zur automatischen Einstellung der Position des Nachbeschleunigungsorgans innerhalb einer landwirtschaftlichen Erntemaschine, insbesondere einem Feldhäcksler und eine Vorrichtung zur Durchführung des Verfahrens gemäß den Oberbegriffen der Ansprüche 1 und 15.

Unterschiedliche Witterungsbedingungen, Durchsatzmassen und -arten haben Einfluss auf die Qualität und die Sicherheit der Erntegutförderung innerhalb der Erntemaschine. Beispielsweise können beim Einzug von Gras unter feuchten Bedingungen und bei unterschiedlicher Fördergutmasse Klumpenbildungen auftreten, die den Erntegutstrom erheblich beeinträchtigen. Diese Beeinträchtigungen wirken sich sowohl auf die Beförderung innerhalb der Erntemaschine als auch beim Auswurf aus.

In der DE 19732722 ist ein Fördergebläse für einen Feldhäcksler beschrieben. Dieses Fördergebläse soll im Fall auftretender Verstopfungen schnell ausräumbar sein. Daher ist in unmittelbarer Nähe des Fördergebläses ein Verschleißblech im Eingangsschacht an einem Rahmenteil angebracht. Beide Organe sind abnehmbar, wodurch der Zugriff in das Innere des Gebläses ermöglicht wird um die Verstopfungen zu entfernen. Zudem sind die Organe alternativ zueinander abstandsveränderlich ausgestaltet, so dass der Spalt zwischen diesen und dem Rotationskreis des Förderrotors manuell verändert werden kann.

Der Nachteil der in der DE 19732722 offenbarten Ausführung liegt darin, dass aufgrund der ausschließlich manuellen Eingriffsmöglichkeiten der hierfür benötigte Zeitaufwand erheblich ist. Unter diesen Bedingungen ist eine spontane Reaktion auf Erntegutflussveränderungen unwirtschaftlich und unmittelbar ohne Unterbrechung des Ernteverfahrens nicht ausführbar. Zudem bedarf es einer exakten Montage der verschiedenen Stellschrauben, da bereits ein geringfügiges Abweichen einer einzelnen Verstellschraube Unebenheiten an der Innenseite des Rotationsgehäuses verursacht. Hierdurch bleibt insbesondere feuchtes Erntegut haften und kann zur verstärkten Anhäufung und Erntegutflussstörung führen. Aus diesem Grund bedarf es der regelmäßigen Kontrolle dieses Abschnittes. Dies gilt auch im Hinblick auf seine Dichtheit. Insgesamt ist es nach der in der DE 19732722 offenbarten Erfindung nicht möglich ohne Störung der Feldarbeit auf Gutflussveränderungen zu reagieren. Dies kann zudem nur manuell erfolgen was zu einer erheblichen Stillstandszeit und Montagearbeit führt. Sollte auf die Reinigungs- und Montagearbeiten verzichtet werden wird zudem ein Erntegutverlust hingenommen, da durch den verschlechterten Erntegutfluss ein optimaler Erntegutwurfstrahl in ein Transportfahrzeug verhindert wird und dadurch - je nach Witterungsbedingungen und Windeinflüssen - bis zu 30 % des Erntegutes verloren gehen kann.

Es ist deshalb die Aufgabe der vorliegenden Erfindung, ein Verfahren und eine Vorrichtung zur Durchführung des Verfahrens zu schaffen, das automatisch und ohne Unterbrechung des Ernteeinsatzes den Erntegutfluss und den Erntegutwurfstrahl der Erntegutfeuchte und -beschaffenheit anpasst.

Diese Aufgabe wird erfindungsgemäß durch die Merkmale des Patentanspruchs 1 gelöst, wobei in den weiteren Patentansprüchen Merkmale aufgeführt sind, die diese Lösung in vorteilhafter Weise weiterentwickeln.
Durch die bewegbare Anordnung des Nachbeschleunigungsorgans zu den ihm zumindest teilweise ummantelnden Gehäuse wird ein ungehinderter Erntegutfluss gewährleistet. Hierdurch wird die unmittelbare Reaktion des Nachbeschleunigungsorgans auf Erntegutflussveränderungen ermöglicht. Aufgrund dieser direkten Positionsveränderung des Nachbeschleunigungsorgans werden Erntegutstauungen in Form von Klumpenbildungen vermieden. Zudem bedarf es keiner Einschränkung des Ernteprozesses, so dass dieser fließend durchgeführt werden kann.
Die Bewegbarkeit des Nachbeschleunigungsorgans kann konstruktiv besonders einfach durch einen Schienen- oder Schwenkmechanismus erreicht werden.
In vorteilhafter Weiterbildung der Erfindung erfolgt die Verstellung des Nachbeschleunigungsorgans in Abhängigkeit von der Erntegutgeschwindigkeit, -dichte und/oder -feuchte und selbsttätig. Insbesondere die selbsttätige Verstellbarkeit des Nachbeschleunigungsorgans führt zu einer starken Entlastung des Fahrers, der sich ausschließlich auf das Abernten zu konzentrieren hat. Es bedarf keines externen Eingriffes in die Organe, um eine Kontrolle des Erntegutflusses durchzuführen. Zudem entfällt die permanente und manuelle Überprüfung der Erntegutförderung. Hierdurch erfolgt die Ernte wirtschaftlicher, da die Stillstandszeiten entfallen und der Erntevorgang unabhängig von wechselnden Erntebedingungen gleichmäßig fortgeführt werden kann.
In Weiterbildung der Erfindung erfolgt die Verstellung mittels einer Verstellvorrichtung, die in Ausweichrichtung beweglich auf Federpaketen gelagert ist. Hierdurch werden Wurfflügel und Gehäuse bei Verstopfungen vor Beschädigung geschützt. Zudem wird die Gutförderung den jeweiligen Bedingungen angepasst und trägt somit der Wirkungsgradverbesserung bei.
Die Wirkungsgradverbesserung der Gutförderung wird zusätzlich durch die synchrone Verstellung des Nachbeschleunigers in Form eines Anschlages unterstützt. Dieser wird gebildet durch zwei Verstellspindeln, welche mittels eines Synchronisationsmittels gemeinsam bewegt werden. Das Synchronisationsmittel dient dazu die Verstellung des Nachbeschleunigers mit der hierfür erforderlichen Gleichmäßigkeit und Genauigkeit durchzuführen. Dies ist aufgrund der hohen Drehzahl des Nachbeschleunigers und den hierbei auftretenden Kräften zwingend. Bei einer ungleichmäßigen Positionsveränderung käme es anderenfalls zu einer Schrägstellung des Nachbeschleunigers, der angesichts der wirkenden Kräfte nicht mehr in Position gehalten werden könnte und dadurch das Trommelgehäuse beschädigen würde, woraus der Stillstand der Erntemaschine folgt. Um die Genauigkeit der Verstellung zu verbessern kann diese durch mindestens einen Elektromotor erfolgen.
In vorteilhafter Weiterbildung der Erfindung können innerhalb des Emtegutweges Sensoren angebracht werden, die die Feuchte, Dichte und/oder Geschwindigkeit des Erntegutes ermitteln und diese Daten an die erfindungsgemäße Vorrichtung weitergeben. Aufgrund der übermittelten Daten erfolgt die Verstellung des Nachbeschleunigungsorgans, wodurch automatisch die Förderleistung den Gegebenheiten optimal angepasst wird, ohne den Erntevorgang unterbrechen zu müssen.
Durch die insgesamt erreichte Feinabstimmung der Organe wird die für die Ernte benötigte Energie auf das tatsächlich benötigte Maß begrenzt, wodurch der Verbrauch an Energie und Kraftstoff stets auf dem niedrigsten Niveau gehalten wird.

Ferner wird durch die stetige Anpassung an Erntegutflussveränderungen der aufkommende Nebenwind reduziert. Hierdurch wird nicht nur der Wirkungsgrad der Gutförderung verbessert, sondern außerdem der Wurfstrahl des Ernteguts optimal gebündelt, so dass die Wurfeigenschaft vom Auswurfkrümmer bis in den Transportwagen konstant bleibt. Daher kann der Verlust des Ernteguts auf dieser Strecke gering gehalten werden.

Eine weitere Aufgabe der Erfindung ist es, ein Verfahren zu schaffen, dass erntegut- und/oder förderspezifische Parameter ermittelt und verwertet und in Abhängigkeit hiervon den Erntegutdurchgangsspalt verändert.
Dies wird erfindungsgemäß dadurch gelöst, dass ein oder mehrere Sensoren in der Erntemaschine auf dem Erntegutweg zwischen dem Bearbeitungsgerät und dem Auswurf angeordnet sind. Die Sensoren erfassen und messen den Durchsatz und/oder die Beschaffenheit des Erntegutes. In Abhängigkeit der hierbei ermittelten Werte verstellt sich der Erntegutdurchgangsspalt selbsttätig. Hierdurch erfährt die Gutförderung eine Wirkungsgradverbesserung, die sich positiv auf die Wurfeigenschaften des Ernteguts auswirkt. Diese können zudem dadurch kontrolliert und gesteuert werden, dass ein Sensor innerhalb des Förderschachts dem Nachbeschleunigungsorgan nachgeordnet ist. Hierdurch wird das beschleunigte Erntegut erfasst und bemessen. Sollte eine nachteilige Förderung ermittelt werden, kann auf die Größe des Erntedurchgangsspaltes eingewirkt werden, um eine günstige Förderung zu erreichen. Ebenso kann auf diese Weise der entstehende Wind, der gegen eine Wurfstrahlbündelung wirkt, reduziert werden.

Weitere vorteilhafte Ausgestaltungen sind Gegenstand weiterer Unteransprüche und werden nachfolgend an Hand von Zeichnungen näher erläutert.

Im folgenden wird die Erfindung anhand eines Ausführungsbeispiels dargestellt. Es zeigen:
- Figur 1: einen selbstfahrenden Feldhäcksler in Seitenansicht mit rückwärtig adaptiertem Transportfahrzeug
- Figur 2: eine vergrößerte Darstellung des in der Fig. 1 mit "A" gekennzeichneten Bereichs mit der erfindungsgemäßen Verstelleinrichtung
- Figur 3: einen Schnitt nach der Linie lll - lll in der Figur 2
- Figur 4: eine alternative Ausführung der Achsverschiebungseinrichtung in schematischer Darstellung

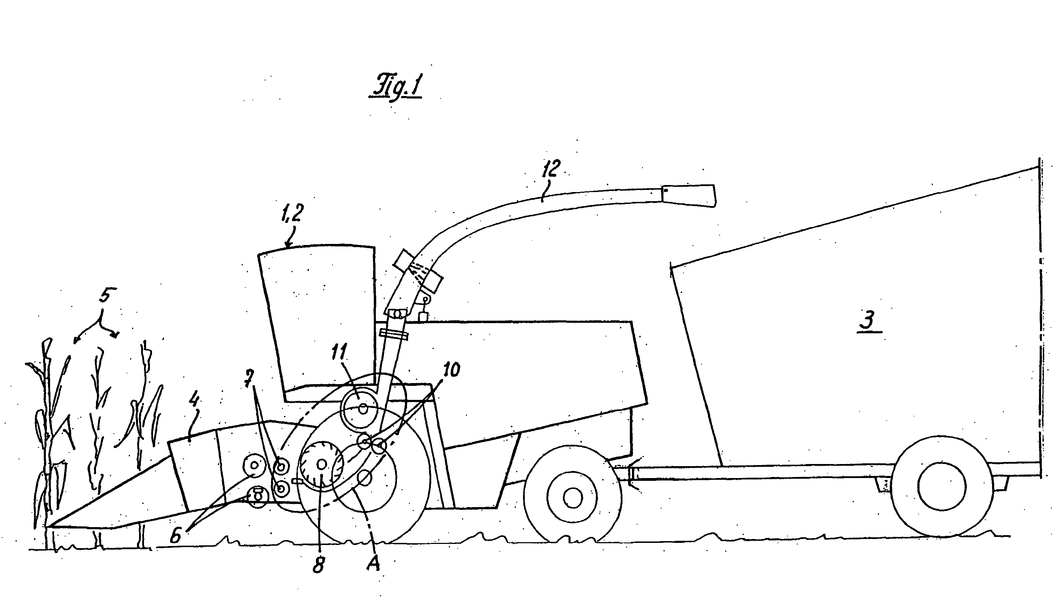

Figur 1 zeigt eine landwirtschaftliche Erntemaschine 1, die als selbstfahrender Feldhäcksler 2 ausgeführt ist. Dem Feldhäcksler 2 ist in seinem rückwärtigen Bereich ein abnehmbares Transportfahrzeug 3 zugeordnet. Das Transportfahrzeug 3 kann alternativ auch neben dem Feldhäcksler 2 geführt werden. Dem Feldhäcksler 2 ist ein Erntegutaufnahmegerät 4 vorgeschaltet, durch das das Erntegut 5 geschnitten und an die nachgeordneten Zuführwalzen 6 übergeben wird. Das Erntegut 5 wird darauf von den Vorpresswalzen 7 übernommen und an die Häckseltrommel 8 zum Häckseln übergeben. Das gehäckselte Erntegut 9 wird sodann an die gegensinnig angetriebenen Konditionierwalzen 10 übergeben, bevor es von dem Nachbeschleunigungsorgan 11 angenommen wird. Es liegt im Rahmen der Erfindung dass beliebig viele Konditionierwalzen 10 vorhanden sein können. Aufgabe der Konditionierwalzen 10 ist, bei der Ernte von Maispflanzen die Maiskörner anzuschlagen. Die Konditionierwalzen 10 können daher auch vollständig weggelassen werden, soweit ein Anschlagen des Ernteguts 5 - wie beispielsweise bei Gras - nicht erforderlich ist. Von dem Nachbeschleunigungsorgan 11 erfährt das gehäckselte Erntegut 9 eine Beschleunigung damit ein sicherer Austritt aus dem Auswurfkrümmer 12 in das Transportfahrzeug 3 gewährleistet wird.

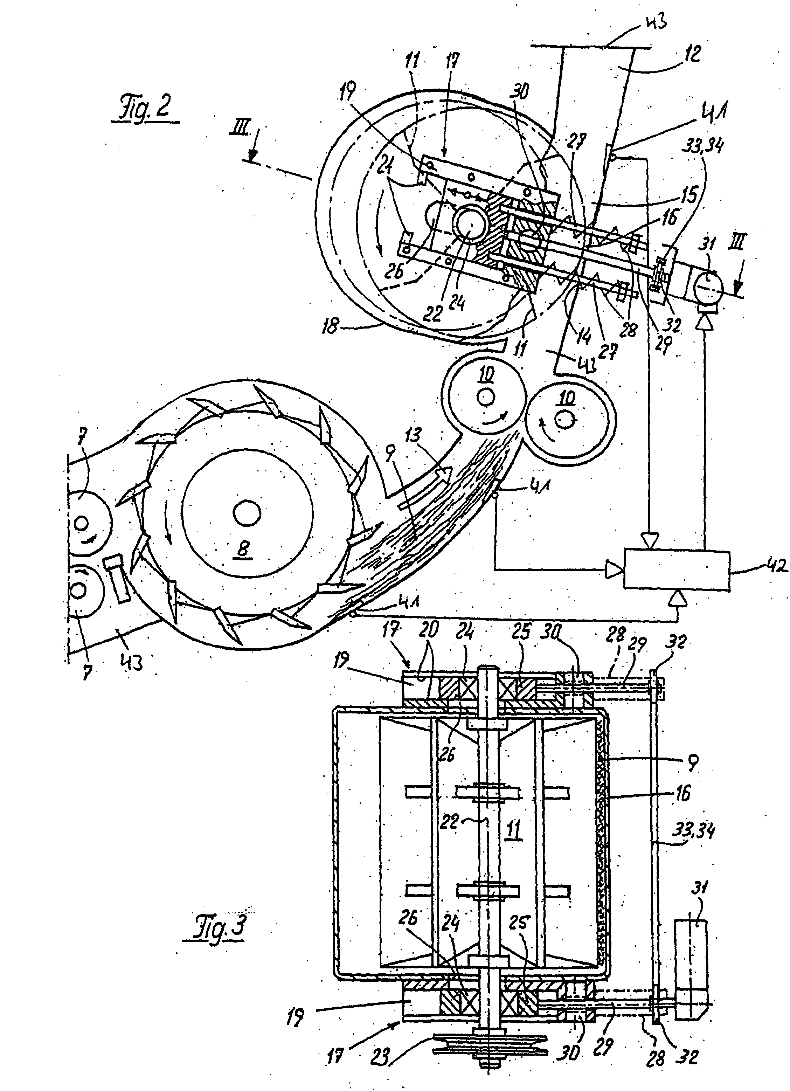

Figur 2 zeigt in vergrößerter Schnittdarstellung den in Figur 1 mit A gekennzeichneten Bereich, den in Pfeilrichtung erfolgenden Erntegutfluss 13, eine Häckseltrommel 8, die Konditionierwalzen 10 und ein Nachbeschleunigungsorgan 11. Die Konditionierwalzen 10 übergeben das gehäckselte Erntegut 9 an das Nachbeschleunigungsorgan 11. Hierbei durchströmt das gehäckselte Erntegut 9 den zwischen dem Nachbeschleunigungsorgan 11 und der Innenwand 14 des Förderschachtes 15 liegenden Erntegutdurchgangsspalt 16. Das Nachbeschleunigungsorgan 11 wird mittels eines mit diesem in Wirkverbindung stehenden Achsverschiebungsmechanismus 17 gegenüber der Innenwand 14 des Förderschachtes 15 verstellt. Hierdurch wird der Erntegutdurchgangsspalt 16 in seiner Weite verändert. Der Achsverschiebungsmechanismus 17 ist in einen am Maschinengehäuse 18 ortsfest angeordnete Stellrahmen 19 gelagert. Der Stellrahmen 19 besteht aus mindestens zwei parallel zueinander angeordnete Führungsflächen 20, die an ihren Enden Anschläge 21 aufweisen.

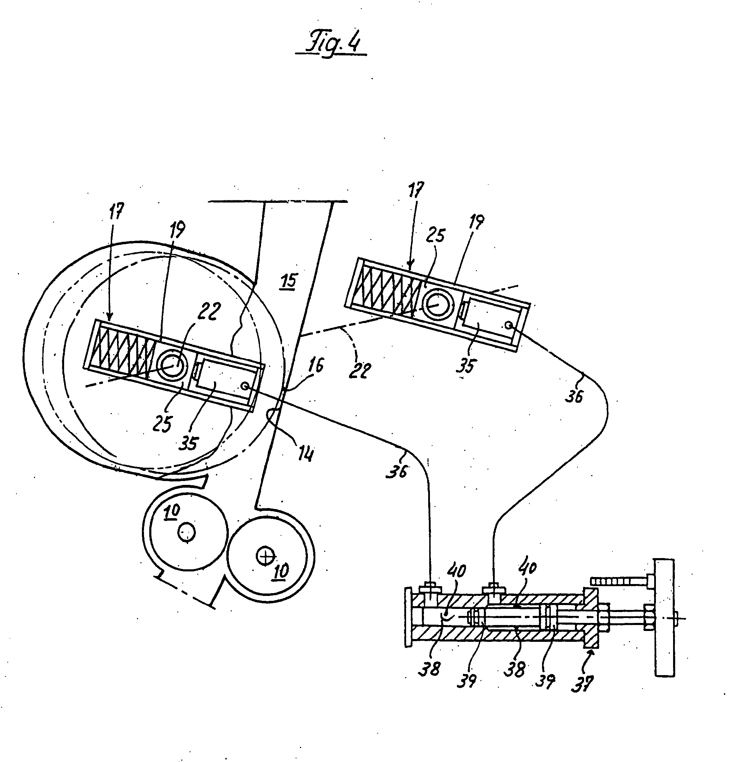

Wie sich aus Figur 3 ergibt ist die Achse 22 des über eine Riemenscheibe 23 angetriebenen Nachbeschleunigungsorgans 11 in dem Stellrahmen 19 gelagert. Die die Achse 22 umschließenden Lager 24 sind dabei in die Gleitblöcke 25 integriert. Der Achsverschiebungsmechanismus 17 greift mindestens einseitig an der Achse 22 des Nachbeschleunigungsorgans 11 an. Als besonders zweckmäßig hat sich die beidseitige Befestigung an den jeweiligen Enden der drehbar gelagerten Achse 22 des Nachbeschleunigungsorgans 11 erwiesen. Hierdurch erfolgt die Abstandsveränderung des Nachbeschleunigungsorgans 11 zur Innenwand 21 des Förderschachtes 15 gleichmäßig innerhalb des hierfür jeweils vorhandenen Langloches 26. Die Verschiebung des Nachbeschleunigungsorgans 11 wird mittels vier Führungsachsen 27 vollzogen, die paarweise in den Achsverschiebungsmechanismus 17 integriert sind. Die Führungsachsen 27 sind ihrerseits von Federn 28 umschlossen und mit einem Ende in einem Gleitblock 25 fixiert. Die Federn 28 können nach Bedarf in ihrer Spannung verändert werden. Die Verstellung des Gleitblocks 25 kann durch eine Spindel 29 erreicht werden. Zu diesem Zweck ist ein Bolzen 30 in die feststehende Führungsfläche 20 eingelassen, der die Gewindemutter für die Spindel 29 darstellt. Die Spindeln 29 werden über jeweils einen Elektromotor 31 gleichlaufend angetrieben. Die einzelnen Spindeln 29 sind über ein ihnen zugeordnetes Zahnrad 32 durch ein Synchronisationsmittel 33, ausgeführt als Kette 34, verbunden. Sowohl die Zahnräder 32 als auch die Kette 34 sind außerhalb des Maschinengehäuses 18 angeordnet. Sowohl der Antriebsmotor 31, die Spindel 29 mit den Zahnrädern 32 und der Kette 34 verändern während der Verstellvorgänge ihren Abstand zur Achse 22 des Nachbeschleunigungsorgans 11. Der Elektromotor 31 ist lediglich über eine Drehmomentstütze mit einem festen Teil des Maschinengehäuses 18 verbunden. Es liegt im Rahmen der Erfindung anstelle der Spindeln 29 mindestens einen Hubzylinder 35 einzusetzen. Als besonders zweckmäßig hat es sich erwiesen zwei Hubzylinder 35 einzusetzen. Die Hubzylinder 35 sind über Druckleitungen 36 mit einer Mehrkammerkolbenpumpe 37 strömungstechnisch verbunden. Die Kammern 38 der Mehrkammerkolbenpumpe 37 sind so ausgelegt, dass beim Verfahren der in den Kammern 38-befindlichen Kolben 39 aus beiden Kammern 38 die gleiche Menge des dort enthaltenen Fluids 40 in die Hubzylinder 35 gedrückt wird, oder dass beim Verfahren des Kolbens 39 in entgegengesetzter Richtung die gleiche Menge des Fluids 40 in die Kammern 38 zurückströmen kann. Hierdurch wird ein synchrones Verfahren gewährleistet.

Durch die Spindeln 29 oder die Hubzylinder 35 wird eine stufenlose oder stufige Verstellung des Erntegutdurchgangsspalt 16 erreicht.
In Figur 1 sind innerhalb der Förderstrecke des gehäckselten Erntegutes 9 angebrachte Sensoren 41 dargestellt. Die Sensoren 41 befinden sich unmittelbar hinter der Häckseltrommel 8, vor den Konditionierwalzen 10 und/oder hinter dem Nachbeschleunigungsorgan 11. Die Sensoren 41 sind derart angeordnet, dass sie das gehäckselte Erntegut 9 vom Einzug bis zum Auswurf erfassen. Die Sensoren 41 generieren ein Eingangssignal zu einer an sich bekannten Auswert- bzw. Recheneinheit 42. Die Auswert- und Recheneinheit 42 steht in Wirkverbindung mit dem Achsverschiebungsmechanismus 17. Nach Empfang des Eingangssignals ermittelt die Auswert- und Recheneinheit 42 ein Ausgangssignal, welches an den Achsverschiebungsmechanismus 17 weitergeleitet wird und die Verstellung der Achse 22 des Nachbeschleunigungsorgans 11 in horizontaler Richtung zum Erntegutfluss 13 auslöst.
Faktoren für die Weite des Erntegutdurchgangsspaltes 16 sind insbesondere die Erntegutdichte, die Erntegutgeschwindigkeit und die Erntegutfeuchte. Die Erntegutdichte und die Erntegutgeschwindigkeit wird in an sich bekannter Weise von den Sensoren 41 gemessen um hierdurch den Durchsatz zu ermitteln Zur Korrektur der Erntegutdichte wird zusätzlich von den Sensoren 41 die Erntegutfeuchte erfasst und in Verbindung mit den zuvor ermittelten Daten ausgewertet. Ergibt diese Auswertung, dass die Durchsatzmenge gering ist, so bewegt sich das Nachbeschleunigungsorgan 11 in horizontaler Richtung zum Erntegutfluss 13 auf die Innenwand 14 des Förderschachtes 15 zu. Die Weite des Erntegutdurchgangsspaltes 16 wird hierdurch verringert, wodurch das gehäckselte Erntegut 9 eine Beschleunigung erfährt. Ist die Durchsatzmenge hoch, vergrößert das Nachbeschleunigungsorgan 11 den Abstand zur Innenwand 14 des Förderschachtes 15 auf dem zuvor beschriebenen Weg. Demzufolge vergrößert sich der Erntegutdurchgangsspalt 16 und das gehäckselte Erntegut 9 durchströmt gleichmäßig ohne Verursachung von Erntegutstauungen den Förderschacht 15.
Schließlich wirkt sich die ermittelte Erntegutfeuchte in an sich bekannter Weise auf die Haufenbildung im Gutstrom aus. Ist das Erntegut 9 trocken, so wird es leicht vom Wind mitgetragen und benötigt weniger Wind. Der Wind wird benötigt um das gehäckselte Erntegut 9 optimal zu bündeln und verlustarm dem Transportfahrzeug 3 zuzuführen. Bei feuchtem Erntegut 9 ist weniger Wind erforderlich, da das gehäckselte Erntegut 9 allein schon durch das höhere spezifische Gewicht mit mehr Wurfenergie und auch gebündelter abgefördert wird.

### Bezugszeichenliste

- 1: Landwirtschaftliche Erntemaschine
- 2: Selbstfahrender Feldhäcksler
- 3: Transportfahrzeug
- 4: Erntegutaufnahmegerät
- 5: Erntegut
- 6: Zuführwalzen
- 7: Vorpresswalzen
- 8: Häckseltrommel
- 9: Gehäckseltes Erntegut
- 10: Konditionierwalzen
- 11: Nachbeschleunigungsorgan
- 12: Auswurfkrümmer
- 13: Erntegutfluss
- 14: Innenwand
- 15: Förderschacht
- 16: Erntegutdurchgangsspalt
- 17: Achsverschiebungsmechanismus
- 18: Maschinengehäuse
- 19: Stellrahmen
- 20: Führungsfläche
- 21: Anschläge
- 22: Achse
- 23: Riemenscheibe
- 24: Lager
- 25: Gleitblock
- 26: Langloch
- 27: Führungsachse
- 28: Feder
- 29: Spindel
- 30: Bolzen
- 31: Elektromotor
- 32: Zahnrad
- 33: Synchronisationsmittel
- 34: Kette
- 35: Hubzylinder
- 36: Druckleitung
- 37: Mehrkammerkolbenpumpe
- 38: Kammer
- 39: Kolben
- 40: Fluid
- 41: Sensoren
- 42: Auswert- und Recheneinheit
- 43: Gutförderstrecke

## Patentansprüche

1. Vorrichtung zur Einstellung des Erntegutdurchgangsspaltes am Nachbeschleunigungsorgan in einer landwirtschaftlichen Erntemaschine, insbesondere an einem selbstfahrenden Feldhäcksler, der über wenigstens ein Vorsatzgerät zur Aufnahme des Ernteguts verfügt und der wenigstens einem Bearbeitungsgerät zugeordnet ist, wobei das von dem Bearbeitungsgerät abgegebene Erntegut zumindest ein wenigstens teilweise von einem Maschinengehäuse ummanteltes Nachbeschleunigungsorgan durchläuft
**dadurch gekennzeichnet, dass**
das Nachbeschleunigungsorgan (11) relativ zu dem das Nachbeschleunigungsorgan (11) wenigstens teilweise ummantelnden Maschinengehäuse (18) bewegbar ist.

2. Vorrichtung zur Einstellung des Erntedurchgangsspaltes am Nachbeschleunigungsorgan nach Anspruch 1,
**dadurch gekennzeichnet, dass**
die Bewegbarkeit des Nachbeschleunigungsorgans (11) durch eine Linear- und/oder eine Schwenkbewegung erreicht wird.

3. Vorrichtung zur Einstellung des Erntedurchgangsspaltes am Nachbeschleunigungsorgan nach einem oder mehreren der vorangehenden Ansprüche,
**dadurch gekennzeichnet, dass**
die Verstellung des Nachbeschleunigungsorgans (11) in Abhängigkeit von der Gutgeschwindigkeit und/oder Gutdichte und/oder Gutfeuchte erfolgt.

4. Vorrichtung zur Einstellung des Erntedurchgangsspaltes am Nachbeschleunigungsorgan nach einem oder mehreren der vorhergehenden Ansprüche,
**dadurch gekennzeichnet, dass**
die Verstellung des Nachbeschleunigungsorgans (11) selbsttätig erfolgt.

5. Vorrichtung zur Einstellung des Erntedurchgangsspaltes am Nachbeschleunigungsorgan nach einem oder mehreren der vorangehenden Ansprüche,
**dadurch gekennzeichnet, dass**
die Verstellung mittels eines Achsverschiebemechanismus (17) erreicht wird.

6. Vorrichtung zur Einstellung des Erntedurchgangsspaltes am Nachbeschleunigungsorgan nach einem oder mehreren der vorangehenden Ansprüche,
**dadurch gekennzeichnet, dass**
der Achsverschiebungsmechanismus (17) mittels Federn (28) gegen einen beweglichen Anschlag (21) geführt ist.

7. Vorrichtung zur Einstellung des Erntedurchgangsspaltes am Nachbeschleunigungsorgan nach einem oder mehreren der vorangehenden Ansprüche,
**dadurch gekennzeichnet, dass**
der Achsverschiebungsmechanismus (17) an einem oder beiden Enden der Achse (22) des Nachbeschleunigungsorgans (11) angreift.

8. Vorrichtung zur Einstellung des Erntedurchgangsspaltes am Nachbeschleunigungsorgan nach einem oder mehreren der vorhergehenden Ansprüche,
**dadurch gekennzeichnet, dass**
die mit Abstand zueinander angeordneten Achsverschiebungsmechanismen (17) durch mindestens ein ihren Antrieb synchronisierende Mittel (33) verbunden sind.

9. Vorrichtung zur Einstellung des Erntedurchgangsspaltes am Nachbeschleunigungsorgan nach einem oder mehreren der vorhergehenden Ansprüche,
**dadurch gekennzeichnet, dass**
die Achse (22) in zumindest einer Richtung federnd gelagert ist.

10. Vorrichtung zur Einstellung des Erntedurchgangsspaltes am Nachbeschleunigungsorgan nach einem oder mehreren der vorhergehenden Ansprüche,
**dadurch gekennzeichnet, dass**
das Synchronisationsmittel (33) aus einer Koppelstange oder einer Kette besteht.

11. Vorrichtung zur Einstellung des Erntedurchgangsspaltes am Nachbeschleunigungsorgan nach einem oder mehreren der vorhergehenden Ansprüche,
**dadurch gekennzeichnet, dass**
die Verstellung des Synchronisationsmittels (33) in axialer Richtung des Nachbeschleunigungsorgans (11) erfolgt.

12. Vorrichtung zur Einstellung des Erntedurchgangsspaltes am Nachbeschleunigungsorgan nach einem oder mehreren der vorhergehenden Ansprüche,
**dadurch gekennzeichnet, dass**
die Verstellung des Synchronisationsmittels (33) über mindestens einen Elektromotor (31) erfolgt.

13. Vorrichtung zur Einstellung des Erntedurchgangsspaltes am Nachbeschleunigungsorgan nach einem oder mehreren der vorhergehenden Ansprüche,
**dadurch gekennzeichnet, dass**
wenigstens ein Sensor (41) an zumindest einer Stelle innerhalb des Förderschachtes (15) angebracht ist und der Sensor (41) die Feuchte und/oder Dichte und/oder Geschwindigkeit des Erntegutes (5) ermittelt.

14. Vorrichtung zur Einstellung des Erntedurchgangsspaltes am Nachbeschleunigungsorgan nach einem oder mehreren der vorhergehenden Ansprüche,
**dadurch gekennzeichnet, dass**
die Verstellung der Achse (22) des Nachbeschleunigungsorgans (11) aufgrund der übertragenen Sensorsignale in horizontaler Richtung erfolgt.

15. Verfahren zur Einstellung des Erntedurchgangsspaltes am Nachbeschleunigungsorgan in einer landwirtschaftlichen Erntemaschine, insbesondere an einem selbstfahrenden Feldhäcksler, der über wenigstens ein Vorsatzgerät zur Aufnahme des Ernteguts verfügt und der wenigstens einem Bearbeitungsgerät zugeordnet ist, wobei das von dem Bearbeitungsgerät abgegebene Erntegut zumindest ein wenigstens teilweise von einem Gehäuse ummanteltes Nachbeschleunigungsorgan durchläuft,
**dadurch gekennzeichnet, dass**
mindestens ein Sensor (41) einen oder mehrere Erntegutparameter an beliebiger Stelle innerhalb der Gutförderstrecke (43) sensiert, wobei sich die Weite des Erntegutdurchgangsspaltes (16) in Abhängigkeit von diesen Emtegutparametem stufig oder stufenlos verändert.

16. Verfahren zur Einstellung des Erntedurchgangsspaltes am Nachbeschleunigungsorgan nach Anspruch 15,
**dadurch gekennzeichnet, dass**
mindestens ein Sensor (41) das/die Erntegutparameter Feuchtigkeit und/oder Dichte und/oder Geschwindigkeit misst.

17. Verfahren zur Einstellung des Erntedurchgangsspaltes am Nachbeschleunigungsorgan nach einem oder mehreren der Ansprüche 15 - 16,
**dadurch gekennzeichnet, dass**
die Weite des Erntegutdurchgangsspaltes (16) selbsttätig änderbar ist.

## Claims

1. Apparatus for adjusting the crop material through-passage gap at the post-acceleration unit in an agricultural harvester, in particular on a self-propelled forage harvester, which has at least one front-mounted implement for picking up the crop material and which is associated with at least one working unit, wherein the crop material delivered by the working unit passes through at least one post-acceleration unit which is at least partially enclosed by a machine housing,
**characterised in that**
the post-acceleration unit (11) is movable relative to the machine housing (18) which at least partially encloses the post-acceleration unit (11).

2. Apparatus for adjusting the crop material through-passage gap at the post-acceleration unit according to claim 1 **characterised in that** mobility of the post-acceleration unit (11) is achieved by a linear movement and/or a pivotal movement.

3. Apparatus for adjusting the crop material through-passage gap at the post-acceleration unit according to one or more of the preceding claims **characterised in that** adjustment of the post-acceleration unit (11) is effected in dependence on the material speed and/or material density and/or material moisture content.

4. Apparatus for adjusting the crop material through-passage gap at the post-acceleration unit according to one or more of the preceding claims **characterised in that** adjustment of the post-acceleration unit (11) occurs automatically.

5. Apparatus for adjusting the crop material through-passage gap at the post-acceleration unit according to one or more of the preceding claims **characterised in that** adjustment is effected by means of a shaft displacement mechanism (17).

6. Apparatus for adjusting the crop material through-passage gap at the post-acceleration unit according to one or more of the preceding claims **characterised in that** the shaft displacement mechanism (17) is guided by means of springs (28) against a movable abutment (21).

7. Apparatus for adjusting the crop material through-passage gap at the post-acceleration unit according to one or more of the preceding claims **characterised in that** the axle displacement mechanism (7) engages one or both ends of the shaft (22) of the post-acceleration unit (11).

8. Apparatus for adjusting the crop material through-passage gap at the post-acceleration unit according to one or more of the preceding claims **characterised in that** the shaft displacement mechanisms (17) which are arranged at a spacing relative to each other are connected by at least one means (33) for synchronising their drive.

9. Apparatus for adjusting the crop material through-passage gap at the post-acceleration unit according to one or more of the preceding claims **characterised in that** the shaft (22) is mounted resiliently in at least one direction.

10. Apparatus for adjusting the crop material through-passage gap at the post-acceleration unit according to one or more of the preceding claims **characterised in that** the synchronisation means (33) comprises a coupling rod or a chain.

11. Apparatus for adjusting the crop material through-passage gap at the post-acceleration unit according to one or more of the preceding claims **characterised in that** displacement of the synchronisation means (33) is effected in the axial direction of the post-acceleration unit (11).

12. Apparatus for adjusting the crop material through-passage gap at the post-acceleration unit according to one or more of the preceding claims **characterised in that** displacement of the synchronisation means (33) is effected by way of at least one electric motor (31).

13. Apparatus for adjusting the crop material through-passage gap at the post-acceleration unit according to one or more of the preceding claims **characterised in that** at least one sensor (41) is disposed at at least one location within the conveyor shaft (15) and the sensor (41) ascertains the moisture content and/or density and/or speed of the crop material (5).

14. Apparatus for adjusting the crop material through-passage gap at the post-acceleration unit according to one or more of the preceding claims **characterised in that** displacement of the shaft (22) of the post-acceleration unit (11) is effected on the basis of the transmitted sensor signals in a horizontal direction.

15. A method of adjusting the crop material through-passage gap at the post-acceleration unit in an agricultural harvester, in particular on a self-propelled forage harvester, which has at least one front-mounted implement for picking up the crop material and which is associated with at least one working unit, wherein the crop material delivered by the working unit passes through at least one post-acceleration unit which is at least partially enclosed by a machine housing,
**characterised in that**
at least one sensor (41) senses one or more crop material parameters at any location within the material conveyor section (43), wherein the width of the crop material through-passage gap (16) is altered in stepped or stepless manner in dependence on said crop material parameters.

16. A method of adjusting the crop material through-passage gap at the post-acceleration unit according to claim 15 **characterised in that** at least one sensor (41) measures the crop material parameter or parameters moisture content and/or density and/or speed.

17. A method of adjusting the crop material through-passage gap at the post-acceleration unit according to one or more of claims 15 and 16 **characterised in that** the width of the crop material through-passage gap (16) is automatically variable.

## Revendications

1. Dispositif de réglage de l'intervalle de passage de produit récolté au niveau de l'organe de postaccélération dans une machine agricole de récolte, en particulier sur une ensileuse automotrice équipée d'au moins un engin frontal pour ramasser le produit à récolter et associée à au moins un outil de transformation, le produit récolté fourni par l'outil de transformation traversant au moins un organe de postaccélération entouré au moins en partie par un carter de machine, **caractérisé en ce que** l'organe de postaccélération (11) est mobile par rapport au carter de machine (18) entourant au moins partiellement l'organe de postaccélération (11).

2. Dispositif de réglage de l'intervalle de passage de produit récolté au niveau de l'organe de postaccélération selon la revendication 1, **caractérisé en ce que** la mobilité de l'organe de postaccélération (11) est obtenue par l'intermédiaire d'un déplacement linéaire et/ou pivotant.

3. Dispositif de réglage de l'intervalle de passage de produit récolté au niveau de l'organe de postaccélération selon une ou plusieurs des revendications précédentes, **caractérisé en ce que** le déplacement de l'organe de postaccélération (11) s'effectue en fonction de la vitesse du produit récolté et/ou de la densité du produit récolté et/ou de l'humidité du produit récolté.

4. Dispositif de réglage de l'intervalle de passage de produit récolté au niveau de l'organe de postaccélération selon une ou plusieurs des revendications précédentes, **caractérisé en ce que** le déplacement de l'organe de postaccélération (11) s'effectue automatiquement.

5. Dispositif de réglage de l'intervalle de passage de produit récolté au niveau de l'organe de postaccélération selon une ou plusieurs des revendications précédentes, **caractérisé en ce que** le déplacement est obtenu au moyen d'un mécanisme de translation d'axe (17).

6. Dispositif de réglage de l'intervalle de passage de produit récolté au niveau de l'organe de postaccélération selon une ou plusieurs des revendications précédentes, **caractérisé en ce que** le mécanisme de translation d'axe (17) est guidé jusqu'à une butée mobile (21) au moyen de ressorts (28).

7. Dispositif de réglage de l'intervalle de passage de produit récolté au niveau de l'organe de postaccélération selon une ou plusieurs des revendications précédentes, **caractérisé en ce que** le mécanisme de translation d'axe (17) agit sur l'une des extrémités de l'axe (22) de l'organe de postaccélération (11) ou sur les deux.

8. Dispositif de réglage de l'intervalle de passage de produit récolté au niveau de l'organe de postaccélération selon une ou plusieurs des revendications précédentes, **caractérisé en ce que** les mécanismes de translation d'axes (17) disposés à distance l'un de l'autre sont reliés par au moins un moyen (33) synchronisant leur entraînement.

9. Dispositif de réglage de l'intervalle de passage de produit récolté au niveau de l'organe de postaccélération selon une ou plusieurs des revendications précédentes, **caractérisé en ce que** l'axe (22) est monté élastiquement dans au moins une direction.

10. Dispositif de réglage de l'intervalle de passage de produit récolté au niveau de l'organe de postaccélération selon une ou plusieurs des revendications précédentes, **caractérisé en ce que** le moyen de synchronisation (33) est constitué par une tige d'accouplement ou par une chaîne.

11. Dispositif de réglage de l'intervalle de passage de produit récolté au niveau de l'organe de postaccélération selon une ou plusieurs des revendications précédentes, **caractérisé en ce que** le déplacement du moyen de synchronisation (33) s'effectue dans la direction axiale de l'organe de postaccélération (11).

12. Dispositif de réglage de l'intervalle de passage de produit récolté au niveau de l'organe de postaccélération selon une ou plusieurs des revendications précédentes, **caractérisé en ce que** le déplacement du moyen de synchronisation (33) s'effectue par l'intermédiaire d'au moins un moteur électrique (31).

13. Dispositif de réglage de l'intervalle de passage de produit récolté au niveau de l'organe de postaccélération selon une ou plusieurs des revendications précédentes, **caractérisé en ce qu'**au moins un senseur (41) est implanté en au moins un point à l'intérieur de la colonne d'amenée (15), et le senseur (41) détermine l'humidité et/ou la densité et/ou la vitesse du produit récolté (5).

14. Dispositif de réglage de l'intervalle de passage de produit récolté au niveau de l'organe de postaccélération selon une ou plusieurs des revendications précédentes, **caractérisé en ce que** le déplacement de l'axe (22) de l'organe de postaccélération (11) sur la base des signaux de senseur transmis s'effectue dans la direction horizontale.

15. Procédé de réglage de l'intervalle de passage de produit récolté au niveau de l'organe de postaccélération dans une machine agricole de récolte, en particulier sur une ensileuse automotrice équipée d'au moins un engin frontal pour ramasser le produit à récolter et associée à au moins un outil de transformation, le produit récolté fourni par l'outil de transformation traversant au moins un organe de postaccélération entouré au moins en partie par un carter de machine, **caractérisé en ce qu'**au moins un senseur (41) capte un ou plusieurs paramètres du produit récolté en un point quelconque du trajet de transport de produit récolté (43), la largeur de l'intervalle de passage de produit récolté (16) variant de façon graduelle ou continue en fonction de ces paramètres de produit récolté.

16. Procédé de réglage de l'intervalle de passage de produit récolté au niveau de l'organe de postaccélération selon la revendication 15, **caractérisé en ce qu'**au moins un senseur (41) mesure le/les paramètres de produit récolté que sont l'humidité et/ou la densité et/ou la vitesse.

17. Procédé de réglage de l'intervalle de passage de produit récolté au niveau de l'organe de postaccélération selon une ou plusieurs des revendications 15 et 16, **caractérisé en ce que** la largeur de l'intervalle de passage de produit récolté (16) peut varier automatiquement.
